# EUROPÄISCHE PATENTSCHRIFT

(11) **EP 1 022 204 B1**
(45) Veröffentlichungstag und Bekanntmachung des Hinweises auf die Patenterteilung: **24.03.2004**
(21) Anmeldenummer: 99124900.4
(22) Anmeldetag: 17.12.1999
(51) Int. Cl.: B60T 13/68, B60T 13/26

(54) **Anhängersteuerventil für eine Druckluftbremsanlage von Zugfahrzeug-Anhänger-Kombinationen**
Trailer control valve for a pneumatic brake system of tractor-trailer combinations
Valve de commande de remorque pour installation de freinage à air comprimé d'un ensemble tracteur-remorque

(30) Priorität: 21.01.1999 DE 19902225
(43) Veröffentlichungstag der Anmeldung: 26.07.2000
(73) Patentinhaber: KNORR-BREMSE Systeme für Nutzfahrzeuge GmbH, 80809 München (DE)
(72) Erfinder: Röther, Friedbert, 74389 Cleebronn (DE)

(56) Entgegenhaltungen:
- EP-A- 0 387 004
- EP-A- 0 582 990

## Beschreibung

### Stand der Technik

Die Erfindung geht aus von einem Anhängersteuerventil für eine Druckluftbremsanlage von Zugfahrzeug-Anhänger-Kombinationen nach der Gattung des Patentanspruchs 1 so ein Ventil ist z.B aus EP-A- 0 387 004 bekannt.

Aus dem Stand der Technik sind Anhängersteuerventile bekannt, welche im Zugfahrzeug eingebaut sind und die Bremsanlage des Anhängers mit Druckluft versorgen sowie bei einer Bremsung steuern. Hierbei ist die Bremsanlage des Anhängers durch eine Vorratsleitung und eine Bremsleitung mit dem Anhängersteuerventil des Zugfahrzeugs verbunden. Die bekannten Anhängersteuerventi le beinhalten je ein Doppelsitzventil (Ein-, Auslaßventil), zwei Steuerkolben, drei Steuerkammem sowie eine Vorratskammer und eine Arbeitskammer. Die drei Steuerkammem öffnen und schließen das Doppelsitzventil, welches die Bremsleitung be- oder entlüftet. Die drei Steuerkammem werden durch vier Steuerkreise angesteuert, einen elektro-pneumatischen Steuerkreis, einen ersten pneumatischen Betriebsbremskreis, einen zweiten pneumatischen Betriebsbremskreis sowie einen Feststellbremskreis. Beim Bremsen des Zugfahrzeugs durch Betätigen eines Bremswertgebers/Betriebsbremsventils werden sowohl der elektro-pneumatische Steuerkreis als auch die beiden pneumatischen Betriebsbremskreise mit Steuerdruck beaufschlagt. Der Festsiellbremskreis steuert neben der Feststell-Bremsanlage des Zugfahrzeugs auch die Betriebs-Bremsanlage des Anhängers, die sowohl bei einer Betriebsbremsung als auch bei einer Feststellbremsung des Zugfahrzeugs mit Druck beaufschlagt wird.

Der elektro-pneumatische Steuerkreis weist ein in einen elektronischen Regelkreis integriertes elektronisches Steuergerät auf, wobei der elektronische Regelkreis zur stufenlosen Regelung des Bremsdrucks dient. Das elektronische Steuergerät steuert magnetbetätigte Ventile derart an, daß bei Betätigung der Bremse des Zugfahrzeugs Druckluft von einem Vorratsbehälter in eine erste Steuerkammer des Anhängersteuerventils strömen kann und einen ersten Steuerkolben gegen einen Ventilkörper des Doppelsitzventils drückt, worauf dieser von seinem Ventilsitz abhebt und Druckluft von der Vorratskammer in die Arbeitskammer und von dort in die Bremsleitung des Anhängers strömen läßt.

Bei Betätigen der Bremse des Zugfahrzeugs schaltet die Steuerelektronik außerdem ein elektromagnetisches Rückhaltventil in seine Sperrstellung, so daß der erste pneumatische Betriebsbremskreis, welcher ebenfalls an die erste Steuerkammer des Anhängersteuerventils angeschlossen ist, nicht wirksam werden kann. Das Bremssignal des elektro-pneumatischen Steuerkreises hat daher Vorrang vor dem Bremssignal des ersten pneumatischen Betriebsbremskreises. Erst bei Ausfall des führenden elektro-pneumatischen Steuerkreises übemimmt der nachrangige erste pneumatische Betriebsbremskreis die Steuerfunktion, indem das elektromagnetische Rückhaltventil in die stromlose Durchgangsstellung geschaltet wird.

Unabhängig von der Funktion des elektro-pneumatischen Steuerkreises ist die dritte Steuerkammer mit dem zweiten pneumatischen Betriebsbremskreis verbunden, dessen Drucksignale auf einen zweiten Steuerkolben des Anhängersteuerventils übertragen werden, welcher ebenfalls das Doppelsitzventil betätigen und dadurch die Bremsleitung des Anhängers mit Druckluft beaufschlagen kann.

Das bekannte Anhängersteuerventil hat den Nachteil, daß der zweite pneumatische Betriebsbremskreis den vorrangigen elektro-pneumatischen Steuerkreis überspielen kann, wenn der Druck im elektro-pneumatischen Steuerkreis aufgrund einer nur geringen Bremsdruckanforderung durch die elektronische Regelung zu niedrig ist, weil z.B. bei einer Regelung der Koppelkraft zwischen Zugfahrzeug und Anhänger der Bremsdruck der Anhängerbremsanlage vermindert wird. Dies würde zu einem unerwünschten Unwirksamwerden der elektronischen Regelung am Anhängersteuerventil führen.

### Vorteile der Erfindung

Das erfindungsgemäße Anhängersteuerventil hat demgegenüber den Vorteil, daß im ersten Teil der Rückhaltekammer mittels der Drucksignale des elektro-pneumatischen Steuerkreises eine Rückhaltekraft auf den zweiten Steuerkolben erzeugbar ist, welche gegen dessen das Doppelsitzventil betätigende Bewegung wirkt. Dadurch kann der modulierte Bremsdruck im vorrangigen, elektro-pneumatischen Steuerkreis auf einen niedrigen Wert eingeregelt werden, ohne daß der nachrangige, zweite pneumatische Betriebsbremskreis am zweiten Steuerkolben anspricht. Eine solche Reduzierung des Bremsdrucks ist gerade bei Bremssystemen, welche eine Koppelkraftregelung beinhalten, von Vorteil. Bedingt durch die zusätzliche Rückhaltung kann der Anhänger mit geringem Bremsdruck abgebremst werden.

Besonders vorteilhaft ist weiterhin, daß zwischen dem verschieblichen Körper und dem Ventilgehäuse ein zweiter Teil der Rückhaltekammer gebildet ist, in welcher eine der Rückhaltekraft entgegengerichtete und im wesentlichen gleich große Stützkraft auf den verschieblichen Körper erzeugbar ist. Da die Rückhaltekraft im ersten Teil der Rückhaltekammer nicht nur auf den zweiten Steuerkolben sondern auch auf den verschieblichen Körper selbst wirkt, verhindert die im zweiten Teil der Rückhaltekammer wirkende entgegengerichtete und sich am Ventilgehäuse abstützende Stützkraft, daß sich der verschiebliche Körper ungewollt verschiebt.

Weitere Vorteile ergeben sich daraus, daß der verschiebliche Körper bei Druckabfall in der Vorratskammer durch die Drucksignale in der zweiten Steuerkammer derart verschiebbar ist, daß er auf den zweiten Steuerkolben eine Mitnahmekraft erzeugt, welche die das Doppelsitzventil betätigende Bewegung des zweiten Steuerkolbens unterstützt. Hierdurch kann bei Abfall des Vorratsdrucks der zweite Steuerkolben schneller auf ein Bremsdruckanforderungssignal des zweiten pneumatischen Betriebsbremskreises ansprechen.

Durch die in den Unteransprüchen aufgeführten Maßnahmen sind vorteilhafte Weiterbildungen und Verbesserungen des im Patentanspruch 1 angegebenen Anhängersteuerventils möglich.

Besonders zu bevorzugende Ausgestaltungen sehen vor, daß der zweite Steuerkolben einen fußseitigen Kolbenzapfen aufweist, entlang dessen der verschiebliche Körper mittels einer mittigen Durchgangsbohrung aufgenommen ist und daß die vom verschieblichen Körper auf den zweiten Steuerkolben erzeugbare Mitnahmekraft durch einen Anschlag am Kolbenzapfen übertragbar ist. Da das gattungsbildende Anhängersteuerventil ebenfalls einen fußseitigen Kolbenzapfen aufweist, sind durch diese Maßnahmen bei bereits bestehenden Anhängersteuerventilen keine tiefgreifenden konstruktiven Änderungen notwendig, um einen verschieblichen Körper gemäß der Erfindung vorzusehen.

### Zeichnungen

Ausführungsbeispiele der Erfindung sind in den Zeichnungen dargestellt und in der nachfolgenden Beschreibung näher erläutert. Es zeigen :
Figur 1 ein Schaltschema eines Anhängersteuerventils gemäß der Erfindung in einer bevorzugten Ausführungsform;
Figur 2 eine Längsschnitt durch eine konstruktive Ausführung des Anhängersteuerventils von Fig.1;
Figur 3 eine stark vereinfachte und schematische Funktionsdarstellung des Anhängersteuerventils von Fig.2; und
Figur 4 ein Diagramm, welches Druckverläufe in der Bremsleitung des Anhängers zeigt, wobei die Bremsdrücke durch ein Anhängersteuerventil gemäß der Erfindung gesteuert werden.

### Beschreibung der Ausführungsbeispiele

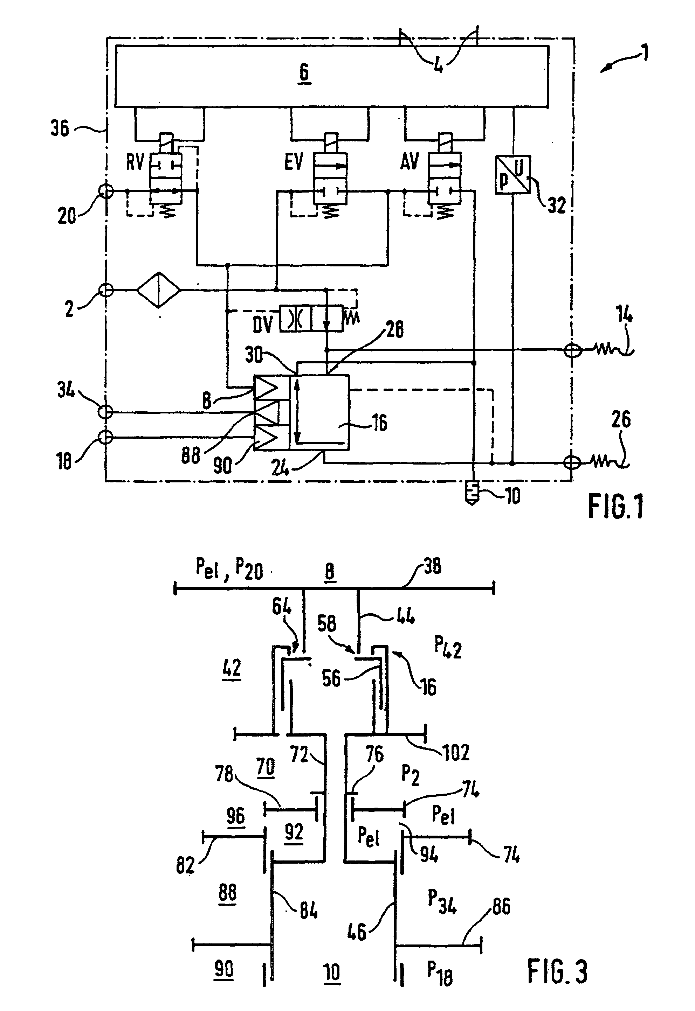

In Fig.1 ist ein Schaltschema eines elektrisch und pneumatisch ansteuerbaren Anhängersteuerventils 1 gemäß einer bevorzugten Ausführungsform der Erfindung dargestellt. Das Anhängersteuerventil 1 ist mit einem Anschluß 2 an einen Druckluftvorrat und über elektrische Steueranschlüsse 4 an einen elektro-pneumatischen Steuerkreis der Zugmaschine angeschlossen. Der elektro-pneumatische Steuerkreis steht mit dem elektrischen Teil eines nicht dargestellten Bremswertgebers oder Betriebsbremsventils der Betriebsbremsanlage der Zugmaschine in Verbindung.

Das Anhängersteuerventil 1 weist ein elektronisches Steuergerät 6 auf, welches über Signalleitungen ein Rückhaltventil RV, ein Einlaßventil EV und ein Auslaßventil AV ansteuert. Das Einlaßventil EV und das Auslaßventil AV sind als elektromagnetbetätigte 2/2-Wegeventile mit stromloser Sperrstellung ausgebildet, wobei das Einlaßventil EV zuströmseitig mit dem Vorratsluftanschluß 2 und abströmseitig mit einer in Fig.1 schematisch als Betätigungsmittel dargestellten, ersten Steuerkammer 8 des Anhängersteuerventils 1 verbunden ist, während das Auslaßventil AV zuströmseitig mit der ersten Steuerkammer 8 und abströmseitig mit einem als Geräuschdämpfer 10 ausgebildeten Entlüftungsauslaß verbunden ist. Im weiteren zweigt von der Zuströmseite des Einlaßventils EV eine Drosselleitung mit einem Drosselventil DV ab.

Das Anhängersteuerventil 1 umfaßt im weiteren ein Doppelsitzventil 16 (Ein- und Auslaßventil), welches über einen pneumatischen Steueranschluß 20 vom ersten pneumatischen Betriebsbremskreis und über einen weiteren pneumatischen Steueranschluß 18 von einem zweiten pneumatischen Betriebsbremskreis der Zugmaschine ansteuerbar ist. Das vom elektronischen Steuergerät 6 schaltbare, elektromagnetbetätigte Rückhaltventil RV steht zuströmseitig mit dem pneumatischen Steueranschluß 20 und abströmseitig mit der ersten Steuerkammer 8 in Verbindung, über welche das Doppelsitzventil 16 des Anhängersteuerventils 1 durch Druckaufbau im Bremssinn schaltbar ist. Das Doppelsitzventil 16 ist im weiteren auch über den pneumatischen Steueranschluß 18 durch Druckaufbau im Bremsinn schaltbar. Die Steueranschlüsse 18, 20 erhalten die Bremsdrucksignale von dem nicht dargestellten Betriebsbremsventil der Zugmaschine.

Ein erster Ausgang 24 des Doppelsitzventils 16 ist mit einer Bremsleitung 26 des Anhängers, ein zweiter Eingang 28 mit dessen Vorratsleitung 14 sowie dem Vorratsanschluß 2 und ein zweiter Ausgang 30 mit dem Entlüftungsauslaß 10 verbunden. Über einen Drucksensor 32 werden der Druck in der Bremsleitung 26 des Anhängers gemessen und die Signale an das elektronische Steuergerät 6 übertragen, welches zusammen mit dem Drucksensor 32 in eine Regeleinrichtung zur Regelung des Bremsdrucks innerhalb des elektro-pneumatischen Steuerkreises integriert ist.

Bei wirksamer Steuerung durch den elektro-pneumatischen Steuerkreis nimmt das Rückhaltventil RV seine bestromte Sperrstellung ein, wodurch die Verbindung zwischen dem pneumatischen Steueranschluß 20 des zweiten pneumatischen Betriebsbremskreises und der ersten Steuerkammer 8 des Anhängersteuerventils 1 unterbrochen ist. Demgegenüber nimmt das Rückhaltventil RV bei ausgefallenem elektro-pneumatischem Steuerkreis oder bei ausgefallenem elektronischem Steuergerät seine stromlose Durchgangsstellung ein und ermöglicht somit die Verbindung der ersten Steuerkammer 8 mit dem zweiten pneumatischen Betriebsbremskreis über den pneumatischen Steueranschluß 20. Schließlich ist das Doppelsitzventil 16 über einen mit einem pneumatischen Feststellbremskreis in Verbindung stehenden pneumatischen Steueranschluß 34 durch Druckabbau im Bremssinn schaltbar.

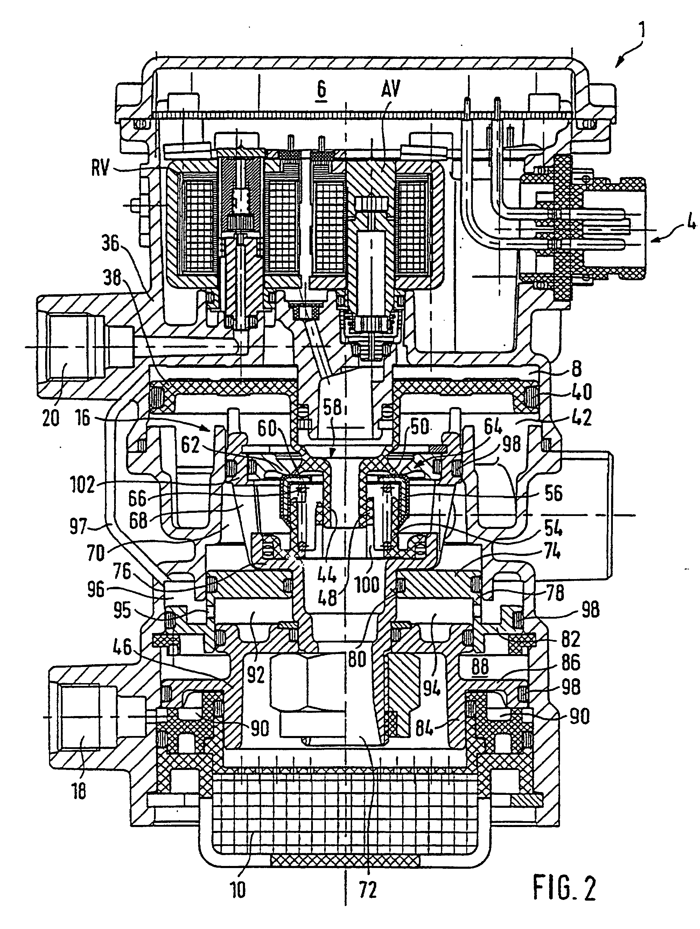

Die konstruktive Ausgestaltung des Anhängersteuerventils 1 gemäß der Erfindung ist in Fig.2 mittels eines Längsschnitts veranschaulicht. Das Drosselventil DV von Fig.1 ist nicht erfindungswesentlich und deshalb in Fig.2 nicht dargestellt. Gemäß Fig.2 sind in einem Ventilgehäuse 36 kopfseitig das Rückhaltventil RV, das Auslaßventil AV und das in dieser Ansicht nicht dargestellte Einlaßventil EV angeordnet. Darüber hinaus ist im Kopfbereich auch das elektronische Steuergerät 6 untergebracht, welches durch die elektrischen Steueranschlüsse 4 mit dem elektro-pneumatischen Steuerkreis der Zugmaschine verbunden ist. Vom Ventilgehäuse 36 und einem ersten Steuerkolben 38 wird die erste Steuerkammer 8 des Anhängersteuerventils 1 begrenzt. Im oberen Teil des Anhängersteuerventils 1 ebenfalls zu erkennen ist der pneumatische Steueranschluß 20 des ersten pneumatischen Betriebsbremskreises, welcher über das Rückhalteventil RV mit der ersten Steuerkammer 8 verbunden ist

Der erste Steuerkolben 38 ist innerhalb des Ventilgehäuses 36 entlang dessen Längsachse verschieblich. Dichtungen 40 an seinem radial äußeren Rand sorgen für eine druckdichte Abdichtung der ersten Steuerkammer 8 gegenüber einer Arbeitskammer 42, welche sich in Längsrichtung des Ventilgehäuses 36 gesehen der ersten Steuerkammer 8 anschließt. Die Arbeitskammer 42 ist über einen nicht dargestellten Anschluß mit der Bremsleitung 26 des Anhängers verbunden.

Der erste Steuerkolben 38 hat einen mittigen, rohrförmigen Fortsatz 44, welcher in eine mittige Öffnung eines zweiten Steuerkolbens 46 ragend in einer inneren Führungsbuchse 48 längsverschieblich gelagert ist Am Fortsatz 44 ist ein als radial äußerer Druckring ausgebildeter innerer Ventilsitz 50 des Doppelsitzventils 16 vorgesehen, welches am kopfseitigen Ende des zweiten Steuerkolbens 46 angeordnet ist. Der radial äußere Druckring 50 des ersten Steuerkolbens 38 bildet zusammen mit einem entlang einer Lagerbuchse 54 des zweiten Steuerkolbens 46 längsverschieblich angeordneten Ventilkörper 56 ein inneres Sitzventil 58 (Auslaßventil) des Doppelsitzventils 16. In der geschlossenen Stellung des inneren Sitzventils 58 ist der Druckring 50 des ersten Steuerkolbens 38 gegen einen Ventilteller 60 des Ventilkörpers 56 druckdicht vorgespannt.

Der zweite Steuerkolben 46 hat einen als radial inneren Druckring ausgebildeten äußeren Ventilsitz 62, welcher den inneren Ventilsitz 50 umschließt und zusammen mit dem Ventilkörper 56 ein äußeres Sitzventil 64 (Einlaßventil) des Doppelsitzventils 16 bildet. Der Ventilkörper 56 ist mit seinem Ventilteller 60 durch den Druck einer im zweiten Steuerkolben 46 versenkt angeordneten Ventildruckfeder 66 gegen den inneren und den äußeren Ventilsitz 50, 62 vorgespannt.

Entlang des Umfangs der den Ventilkörper 56 umschließenden Wand des zweiten Steuerkolbens sind Rippen 68 vorgesehen, durch deren Umfangszwischenräume eine Verbindung zwischen einer den Kopfbereich des zweiten Steuerkolbens 46 umschließenden Vorratskammer 70 und dem Doppelsitzventil 16 geschaffen ist. Die Vorratskammer 70 ist gemäß Fig.1 durch den Anschluß 2 an den Druckluftvorrat des elektro-pneumatischen Steuerkreises der Zugmaschine angeschlossen und steht unter einem Druck p₂.

An das Doppelsitzventil 16 schließt sich ein entlang eines fußseitigen Kolbenzapfens 72 des zweiten Steuerkolbens 46 längsverschieblicher Körper 74 an, dessen Verschieblichkeit in Richtung auf die Vorratskammer 70 durch einen als Absatz am zweiten Steuerkolben 46 ausgebildeten Anschlag 76 nach oben hin begrenzt ist. Der verschiebliche Körper 74 hat vorzugsweise einen Verschiebebecher 78 mit einer mittigen Durchgangsbohrung 80 für die Führung längs des Kolbenzapfens 72 und im weiteren einen von der Becherwand nach radial außen wegragenden ersten Ringbund 82.

Auf das Ende des Kolbenzapfens 72 ist ein Steuerkolbenbecher 84 mittels einer Mutter gespannt, welcher mit einem zweiten, radial äußeren Ringbund 86 versehen ist, wobei einerseits zwischen dem zweiten Ringbund 86 des Steuerkolbenbechers 84, dem ersten Ringbund 82 des Verschiebebechers 78 und dem Ventilgehäuse 36 eine zweite Steuerkammer 88 und andererseits zwischen dem zweiten Ringbund 86 des zweiten Steuerkolbens 46 und dem Ventilgehäuse 36 eine dritte Steuerkammer 90 gebildet ist. Die zweite Steuerkammer 88 ist über einen nicht dargestellten Kanal mit dem pneumatischen Steueranschluß 34 des Feststellbremskreises verbunden (s. Fig.1) und steht unter einem Druck p₃₄. Die dritte Steuerkammer 90 ist mit dem pneumatischen Steueranschluß 18 des zweiten pneumatischen Betriebsbremskreises verbunden und steht unter einem Druck p₁₈.

Der verschiebliche Körper 74 umgreift mit der Becherwand seines Verschiebebechers 78 den Steuerkolbenbecher 84 im Bereich dessen Bodens und ist hierdurch zusätzlich geführt. Zwischen dem Boden des Verschiebebechers 78 und dem Boden des Steuerkolbenbechers 84 ist ein innerer Teil 92 einer Rückhaltekammer 94 sowie zwischen dem ersten Ringbund 82 des Verschiebebechers 78 und dem Ventilgehäuse 36 ein äußerer Teil 96 der Rückhaltekammer 94 gebildet. Der innere und äußere Teil 92, 96 der Rückhaltekammer 94 stehen mittels Durchgänge 95 in der Becherwand des Verschiebebechers 78 miteinander in Verbindung. Zusätzlich ist zwischen der ersten Steuerkammer 8 und der Rückhaltekammer 94 ein Verbindungskanal 97 im Gehäuse 36 vorgesehen, welcher in der Schnittansicht gemäß Fig.2 vereinfacht als außenliegendes Rohr angedeutet ist. Der zweite Steuerkolben 46 ist an mehreren Stellen innerhalb des Ventilgehäuses 36 längsverschieblich geführt, wobei durch Dichtungen 98 sichergestellt ist, daß keine Druckluft aus einer der von ihm begrenzten Kammem entweichen kann. Ebenso ist der verschiebliche Körper 74 mit solchen Dichtungen 98 versehen. Der Kolbenzapfen 72 des zweiten Steuerkolbens 46 ist als Rohr ausgebildet, welches die über Entlüftungsschlitze 100 im zweiten Steuerkolben 46 vom inneren Sitzventil 58 (Auslaßventil) abgelassene Druckluft dem Geräuschdämpfer 10 am Boden des Ventilgehäuses 36 zuführt, von wo aus diese in die Umgebung austritt.

Das Anhängersteuerventil 1, in dessen Vorratskammer 70 und Steuerkammer 88 Vorratsdruck ansteht, hat im Zusammenwirken mit der Betriebsbremsanlage der Zugmaschine bei einer Bremsung folgende Funktionsweise :

Bei Betätigen der Betriebsbremse der Zugmaschine erhält das elektronische Steuergerät 6 vom elektrischen Teil des Betriebsbremsventils über die elektrischen Steueranschlüsse 4 ein elektrisches Bremsdruckanforderungssignal. Mit Auftreten dieses Signals schaltet das elektronische Steuergerät 6 das Rückhaltventil RV in Sperrstellung, so daß ein über den ersten pneumatischen Betriebsbremskreis am pneumatischen Steueranschluß 20 herangeführtes pneumatisches Bremsdruckanforderungssignal des Betriebsbremsventils nicht wirksam werden kann. Das an den elektrischen Steueranschlüssen 4 herrschende Signal des elektro-pneumatischen Steuerkreises hat daher Vorrang vor dem Signal des ersten pneumatischen Betriebsbremskreises. Das elektronische Steuergerät 6 moduliert die Signale an den elektrischen Steueranschlüssen 4 wie folgt: Für Druckaufbau in der ersten Steuerkammer 8 des Anhängersteuerventils 1 wird das Einlaßventil EV durch das elektronische Steuergerät 6 eine bestimmte Zeit lang in seine Durchgangsstellung geschaltet, während das Auslaßventil AV in seiner Sperrstellung verbleibt. Abhängig von der Öffnungszeit des Einlaßventils EV ensteht in der ersten Steuerkammer 8 ein Steuerdruck pₑₗ. Hierdurch wird der erste Steuerkolben 38 zusammen mit dem an seinem Fortsatz 44 anliegenden Ventilkörper 56 gegen die Vorspannung der Ventildruckfeder 66 nach unten gedrückt und der Ventilkörper 56 vom äußeren Ventilsitz 62 abgehoben. Daraufhin kann Druckluft von der Vorratskammer 70 durch die Rippen 68 des zweiten Steuerkolbens 46 und durch das nun geöffnete äußere Sitzventil 64 (Einlaßventil) in die Arbeitskammer 42 und von dort in die Bremsleitung 26 des Anhängers strömen. In der Arbeitskammer herrscht dann ein Druck p₄₂. Für Druckhalten wird das Einlaßventil EV in seine Sperrstellung umgeschaltet. Für Druckabbau bleibt das Einlaßventil EV in seiner Sperrstellung, während das Auslaßventil AV in seine Durchlaßstellung geschaltet wird, wodurch der in der ersten Steuerkammer 8 vorhandene Druck sinkt und der erste Steuerkolben 38 durch den höheren Druck in der Arbeitskammer 42 vom inneren Ventilsitz 50 abhebt. Dann kann die Druckluft in der Arbeitskammer 42 durch das nun geöffnete innere Sitzventil 58 (Auslaßventil), durch die Entlüftungsschlitze 100 und den rohrförmigen Kolbenzapfen 72 hindurch über den Geräuschdämpfer 10 ins Freie treten.

Ist der führende elektro-pneumatische Steuerkreis gestört, nehmen das Einlaßventil EV und das Auslaßventil AV stromlos ihre Sperrstellungen und das Rückhaltventil RV seine stromlose Durchgangsstellung ein. Ein vom ersten pneumatischen Betriebsbremskreis über den pneumatischen Steueranschluß 20 herangeführtes Bremsdruckanforderungssignal wird dann über das durchlässige Rückhalteventil RV in die erste Steuerkammer 8 geleitet, um dort über einen Steuerdruck p₂₀ diesselbe Wirkung zu erzeugen wie vorangehend beschrieben.

Bei Betätigung der Betriebsbremse der Zugmaschine liegt auch am pneumatischen Steueranschluß 18 das pneumatische Bremsdruckanforderungssignal des zweiten pneumatischen Betriebsbremskreises an. Bei intaktem Anhängersteuerventil 1 und ohne Koppelkraftregelung hat der Steuerdruck in der dritten Steuerkammer 90 des zweiten pneumatischen Betriebsbremskreises keine Schaltbewegung des Steuerkolbens 46 zur Folge. Wird aber durch die Regeleinrichtung des elektro-pneumatischen Steuerkreises ein niedriger Steuerdruck pₑₗ in die erste Steuerkammer 8 eingesteuert, z.B. weil wegen einer Koppelkraftregelung des Anhängers nur leicht abgebremst werden soll, so kann der ungeregelte, zweite pneumatische Betriebsbremskreis mit seinem höheren Steuerdruck p₁₈ den führenden elektro-pneumatischen Steuerkreis mit dessen niedrigerem Steuerdruck pₑₗ ungewollt überspielen, indem der höhere Steuerdruck p₁₈ in der dritten Steuerkammer 90 den zweiten Steuerkolben 46 nach oben drängt und das äußere Sitzventil 64 öffnet, wodurch ein zu hoher Bremsdruck in der Bremsleitung 26 aufgebaut wird. Dies würde aber in unerwünschter Weise zur Wirkungslosigkeit der elektronischen Regelung führen.

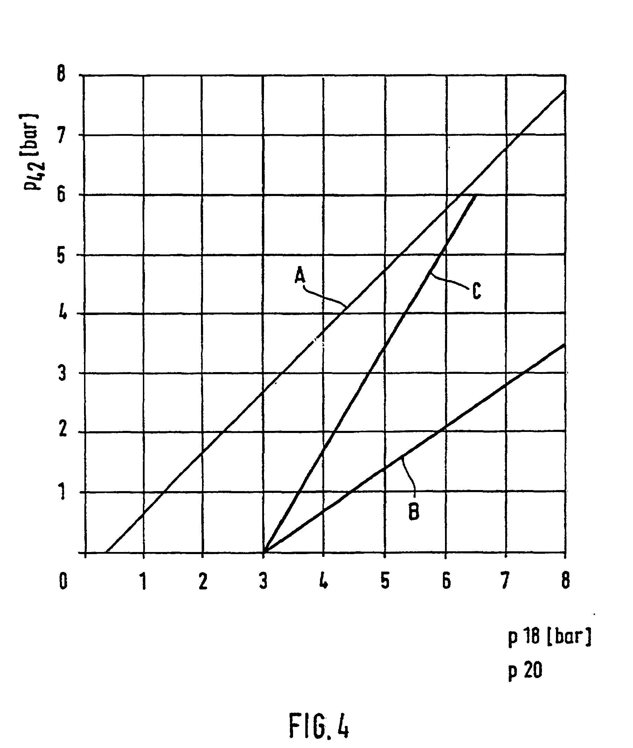

Erfindungsgemäß sind deshalb der verschiebliche Körper 74 und die Rückhaltekammer 94 vorgesehen, in welcher bedingt durch den Verbindungskanal 97 derselbe Druck pₑₗ wie in der ersten Steuerkammer 8 vorherrscht. Wie aus der schematischen Darstellung von Fig.3 hervorgeht, wird der verschiebliche Körper mit p₃₄, p₂ und pₑₗ beaufschlagt. Der Druck pₑₗ verursacht im inneren Teil 92 der Rückhaltekammer 94 eine nach oben wirkende Kraft auf den Boden des Verschiebebechers 78 und im äußeren Teil 96 der Rückhaltekammer 94 eine nach unten wirkende Kraft auf den ersten Ringbund 82 des Verschiebebechers 78, wobei die in Verschieberichtung wirksamen Flächen des Verschiebebechers 78 und des ersten Ringbundes 82 des verschieblichen Körpers 74 derart groß sind, daß sich diese Kräfte annährend kompensieren.

Darüber hinaus entsteht durch den Druck pₑₗ zusätzlich eine nach unten gerichtete Kraft auf den Boden des Steuerkolbenbechers 84, welche einer aus dem Druck p₁₈ in der dritten Steuerkammer 90 herrührenden und nach oben gerichteten Kraft entgegenwirkt. Je größer die aus pₑₗ hervorgehende Kraft auf den Steuerkolbenbecher 84 des zweiten Steuerkolbens 46 ist, umso mehr wird dieser zurückgehalten. Bei intaktem elektrischem Steuerkreis sorgt die Rückhaltekammer 94 daher für eine Zurückhaltung des zweiten Steuerkolbens 46.

In Fig.4 ist die lineare Abhängigkeit des Drucks p₄₂ in der Bremsleitung über den Drücken p₁₈ und p₂₀ in dem zweiten und dem ersten pneumatischen Betriebsbremskreis dargestellt. Die Linie A gibt den Druckverlauf von p₄₂ in Abhängigkeit von p₂₀ und Linie B den Druckverlauf von p₄₂ in Abhängigkeit von p₁₈ bei intaktem elektropneuma-tischem Steuerkreis und bei Vorhandensein einer Rückhaltekammer 94 gemäß der Erfindung an. Wie zu sehen, ist der Druckverlauf gemäß Linie B bedingt durch die Zurückhaltung des zweiten Steuerkolbens 46 relativ flach, was bedeutet, daß eine große Druckänderung von p₁₈ eine nur geringe Druckänderung von p₄₂ in der Bremsleitung des Anhängers hervorruft. Damit hat der zweite pneumatische Betriebsbremskreis bei intaktem elektro-pneumatischem Steuerkreis einen geringeren Einfluß auf den Bremsdruck p₄₂ in der Bremsleitung 26 des Anhängers und kann den führenden elektro-pneumatischen Steuerkreis nicht mehr überspielen.

Bei Ausfall des elektro-pneumatischen Steuerkreises und des ersten pneumatischen Betriebsbremskreises können keine Drücke pₑₗ und p₂₀ mehr in der Rückhaltekammer 94 wirken, so daß die Rückhaltekraft auf den zweiten Steuerkolben 46 entfällt. Dadurch kann sich der zweite Steuerkolben 46 aufgrund des Drucks p₁₈ in der dritten Steuerkammer 90 leichter nach oben bewegen und das äußere Sitzventil 64 (Einlaßventil) öffnen. Dies hat zur Folge, daß dann der Druckverlauf von p₄₂ steiler und eine genügend größe Bremswirkung im Anhänger erzeugt wird, wie durch die Linie C im Diagramm von Fig.4 dargestellt ist.

Wie aus Fig.3 in anschaulicher Weise hervorgeht, wird bei ausgefallenem elektro-pneumatischem Steuerkreis der verschiebliche Körper 74 von unten durch den Druck p₃₄ und von oben durch den Druck p₂ beaufschlagt, während der Druck pₑₗ in der Rückhaltekammer 94 gering ist. Bei einem Abfall des Vorratsdrucks sinkt der Druck p₂ in der Vorratskammer 70 gegenüber dem Druck in der zweiten Steuerkammer 88 ab, wodurch die auf eine obere Kolbenwand 102 des zweiten Steuerkolbens 46 wirkende Kraft kleiner wird. Zwar ist der auf den zweiten Ringbund 86 des zweiten Steuerkolbens 46 von oben wirkende Druck p₃₄ ebenfalls vom Druckvorrat abgezweigt, die zweite Steuerkammer 88 ist aber über ein nicht dargestelltes Rückschlagventil gegen Druckverlust abgesichert. Damit herrscht in der zweiten Steuerkammer 88 ein relativ hoher Druck p₃₄, welcher einerseits den zweiten Steuerkolben 46 zurückhält und andererseits eine hohe, nach oben gerichtete Kraft auf den verschieblichen Körper 74 ausübt. Im weiteren wirkt auf den verschieblichen Körper 74 eine geringe, nach unten gerichtete Kraft aufgrund des niedrigeren Drucks p₂ in der Vorratskammer 70, weshalb sich eine resultierende Kraft nach oben ergibt, welche den verschiebbaren Körper 74 nach oben gegen den Anschlag 76 am zweiten Steuerkolben 46 drückt. Hierdurch wird die durch den Druck p₁₈ in der dritten Steuerkammer 90 verursachte und nach oben gerichtete Kraft auf den zweiten Steuerkolben 46 verstärkt und die geringere Kraft auf die obere Kolbenwand 102 des zweiten Steuerkolbens 46 kompensiert. Damit kann das äußere Sitzventil 64 (Einlaßventil) durch den sich nach oben bewegenden zweiten Steuerkolben 46 öffnen und das Bremsdruckanforderungssignal des zweiten pneumatischen Betriebsbremskreises am Anschluß 18 schneller in einen entsprechenden Bremsdruck in der Bremsleitung 26 umgesetzt werden.

## Patentansprüche

1. Anhängersteuerventil (1) für eine Druckluftbremsanlage von Zugfahrzeug-Anhänger-Kombinationen, welches folgendes beinhaltet :
a) ein Ventilgehäuse (36);
b) eine erste Steuerkammer (8), welche über einen pneumatischen Steueranschluß (20) an einen ersten pneumatischen Betriebsbremskreis und an einen elektro-pneumatischen Steuerkreis der Zugmaschine angeschlossen ist und modulierte Drucksignale auf einen ersten Steuerkolben (38) überträgt, welcher innerhalb des Ventilgehäuses (36) verschieblich aufgenommen ist;
c) einen zweiten Steuerkolben (46), welcher innerhalb des Ventilgehäuses (36) verschieblich aufgenommen ist und zusammen mit einem Ventilkörper (56) und dem ersten Steuerkolben (38) ein von sich und dem ersten Steuerkolben (38) betätigbares Doppelsitzventil (16) bildet;
d) eine Arbeitskammer (42), an welche eine Bremsleitung (26) des Anhängers angeschlossen ist;
e) eine Vorratskammer (70), welche über einen Anschluß (2) mit einem Druckluftvorrat der Zugmaschine in Verbindung steht und welche durch Betätigung des Doppelsitzventils (16) mit der Arbeitskammer (42) strömungsmäßig verbindbar ist;
f) eine zweite Steuerkammer (88), welche über einen Anschluß (34) mit einem Feststellbremskreis der Zugmaschine verbunden ist;
g) eine dritte Steuerkammer (90), welche über einen Anschluß (18) an einen zweiten pneumatischen Betriebsbremskreis der Zugmaschine angeschlossen ist und dessen Drucksignale auf den zweiten Steuerkolben (46) überträgt, wodurch dieser in eine das Doppelsitzventil (52) betätigende Bewegung versetzbar ist,
**dadurch gekennzeichnet, daß**
h) ein durch Drucksignale in der Vorratskammer (70) und in der zweiten Steuerkammer (88) verschieblicher Körper (74) vorgesehen ist, welcher bei Druckabfall in der Vorratskammer (70) durch die Drucksignale in der zweiten Steuerkammer (88) derart verschiebbar ist, daß er auf den zweiten Steuerkolben (46) eine Mitnahmekraft erzeugt, welche die das Doppelsitzventil (16) betätigende Bewegung unterstützt, und daß
i) eine mit der ersten Steuerkammer (8) in Verbindung stehende Rückhaltekammer (94) vorgesehen ist, von welcher zwischen dem verschieblichen Körper (74) und dem zweiten Steuerkolben (46) ein erster Teil (92) gebildet ist, in welchem durch die modulierten Drucksignale eine Rückhaltekraft auf den zweiten Steuerkolben (46) erzeugbar ist, welche gegen dessen das Doppelsitzventil (16) betätigende Bewegung wirkt, und daß
j) zwischen dem verschieblichen Körper (74) und dem Ventilgehäuse (36) ein zweiter Teil (96) der Rückhaltekammer (94) gebildet ist, in welcher eine der Rückhaltekraft entgegengerichtete und im wesentlichen gleich große Kraft auf den verschieblichen Körper (74) erzeugbar ist.

2. Anhängersteuerventil nach Anspruch 1, **dadurch gekennzeichnet, daß** es einen Verbindungskanal (97) aufweist, welcher die erste Steuerkammer (8) mit der Rückhaltekammer (94) verbindet.

3. Anhängersteuerventil nach einem der Ansprüch 1 oder 2, **dadurch gekennzeichnet, daß** der verschiebare Körper (74) einen Verschiebebecher (78) mit einem ersten, radial äußeren Ringbund (82) aufweist, welcher zwischen sich und dem Ventilgehäuse (36) den zweiten Teil (96) der Rückhaltekammer (94) bildet.

4. Anhängersteuerventil nach Anspruch 3, **dadurch gekennzeichnet, daß** der zweite Steuerkolben (46) einen fußseitigen Kolbenzapfen (72) aufweist, entlang dessen der Verschiebebecher (78) durch eine mittige Durchgangsbohrung (80) längsverschieblich aufgenommen ist, und darüber hinaus einen vom Kolbenzapfen (72) getragenen Steuerkolbenbecher (84) mit einem zweiten, radial äußeren Ringbund (86) aufweist, wobei zwischen dem Ventilgehäuse (36) und dem zweiten Ringbund (86) die dritte Steuerkammer (90) gebildet ist.

5. Anhängersteuerventil nach Anspruch 4, **dadurch gekennzeichnet, daß** die vom verschiebbaren Körper (74) auf den zweiten Steuerkolben (46) erzeugbare Mitnahmekraft mittels eines Anschlags (76) am Kolbenzapfen (72) übertragbar ist.

6. Anhängersteuerventil nach Anspruch 5, **dadurch gekennzeichnet, daß** der Verschiebebecher (78) den Steuerkolbenbecher (84) mindestens teilweise umgreift und zwischen seinem Becherboden und dem Becherboden des Steuerkolbenbechers (84) den ersten Teil (92) der Rückhaltekammer (94) bildet.

7. Anhängersteuerventil nach Anspruch 6, **dadurch gekennzeichnet, daß** zwischen dem ersten Ringbund (82) des Verschiebebechers (78), dem zweiten Ringbund (86) des Steuerkolbenbechers (84) und dem Ventilgehäuse (36) die zweite Steuerkammer (88) gebildet ist.

8. Anhängersteuerventil nach Anspruch 7, **dadurch gekennzeichnet, daß** die in Verschieberichtung wirksamen Flächen des Verschiebebechers (78) und des ersten Ringbundes (82) derart groß sind, daß sich die durch eine Druckbeaufschlagung der Rückhaltekammer (94) hervorgerufenen Druckkräfte auf diese Flächen kompensieren.

9. Anhängersteuerventil nach Anspruch 8, **dadurch gekennzeichnet, daß** das Doppelsitzventil (16) am kopfseitigen Ende des zweiten Steuerkolbens (46) angeordnet ist und ein erstes und zweites Sitzventil (58, 64) umfaßt, wobei das erste Sitzventil (58) durch einen ersten Ventilsitz (50) am ersten Steuerkolben (38) und einen Ventilkörper (56) gebildet ist, welcher durch eine Ventildruckfeder (66) gegen einen zweiten Ventilsitz (62) am zweiten Steuerkolben (46) vorgespannt ist und zusammen mit diesem das zweite Sitzventil (64) bildet.

10. Anhängersteuerventil nach einem der vorhergehenden Ansprüche, **dadurch gekennzeichnet, daß** es ein vom elektro-pneumatischen Steuerkreis schaltbares, elektromagnetbetätigtes Rückhalteventil (RV) beinhaltet, welches zuströmseitig über einen Anschluß (20) mit einem ersten pneumatischen Betriebsbremskreis und abströmseitig mit der ersten Steuerkammer (8) in Verbindung steht, wobei das Rückhalteventil (RV) bei wirksamem elektro-pneumatischem Steuerkreis bestromt seine Sperrstellung einnimmt und den ersten pneumatischen Betriebsbremskreis sperrt und ihn bei ausgefallenem elektro-pneumatischen Steuerkreis freigibt, indem es seine stromlose Durchgangsstellung einnimmt.

11. Anhängersteuerventil nach Anspruch 10, **dadurch gekennzeichnet, daß** es ein Einlaßventil (EV) und ein Auslaßventil (AV) beinhaltet, welche vom elektro-pneumatischen Steuerkreis ansteuerbar und als elektromagnetbetätigte 2/2-Wegeventile mit stromloser Sperrstellung ausgebildet sind, wobei das Einlaßventil (EV) zuströmseitig mit dem Anschluß (2) der Vorratsleitung der Zugmaschine und abströmseitig mit der ersten Steuerkammer (8) verbunden ist, während das Auslaßventil (AV) zuströmseitig mit der ersten Steuerkammer (8) und abströmseitig mit einer Ventilentlüftung (10) verbunden ist.

## Claims

1. Trailer control valve (1) for a pneumatic brake system of tractor-trailer combinations, comprising:
(a) a valve housing (36);
(b) a first control chamber (8) that is connected via a pneumatic control connector (20) to a first pneumatic service brake circuit and to an electro-pneumatic control circuit of said tractor vehicle and that transmits modulated pressure signals to a first control piston (38) that is accommodated for displacement inside said valve housing (36);
(c) a second control piston (46) that is accommodated for displacement inside said valve housing (36) and cooperates with a valve body (56) and said first control piston (38) to form a double-seated valve (16) operable by said second control piston and said first control piston (38);
(d) an operating chamber (42) to which a brake line (26) of said trailer is connected;
(e) a reservoir chamber (70) that communicates via a connector (2) to a compressed-air supply of said tractor vehicle and that is adapted to be connected for flow to said operating chamber (42) by operation of said double-seated valve (16);
(f) a second control chamber (88) that is connected via a connector (34) to a parking brake circuit of said tractor vehicle;
(g) a third control chamber (90) that is connected via a connector (18) to a second pneumatic service brake circuit of said tractor vehicle and transmits pressure signals from the latter to said second control piston (46), which causes the latter to carry out a movement for operation of said double-seated valve (52);
**characterised in that**
(h) a body (74) displaceable by pressure signals in said supply chamber (70) and in said second control chamber (88) is provided, which, when the pressure drops in said supply chamber (70), is adapted to be displaced by the pressure signals in said second control chamber (88) in such a way that it generates a carrying force acting upon said second control piston (46), which supports the movement operating said double-seated valve (16), and
(i) that a retaining chamber (94) is provided that communicates with said first control chamber (8) and forms a first section between said displaceable body (74) and said second control piston (46), in which section a retaining force can be generated by the modulated pressure signals upon said second control piston (46), which force acts in opposition to the movement of the latter for operating said double-seated valve (16), and
(j) that between said displaceable body (74) and said valve housing (36) a second section (96) of said retaining chamber (94) is formed in which a force can be generated that acts upon said displaceable body (74) in opposition to the retaining force and is substantially equal to the latter.

2. Trailer control valve according to Claim 1, **characterised in that** it comprises a connecting passage (97) that connects said first control chamber (8) to said retaining chamber (94).

3. Trailer control valve according to any of the Claims 1 or 2, **characterised in that** said displaceable body (74) comprises a displacement cup (78) with a first, radially outer annular collar (82) that constitutes the second section (96) of said retaining chamber (94) between said collar and said valve housing (36).

4. Trailer control valve according to Claim 3, **characterised in that** said second control piston (46) comprises a piston pin (72) on the bottom side, along which said displacement cup (78) is accommodated in a central through-bore (80) for displacement in the longitudinal direction, and comprises furthermore a control piston cup (84) supported by said piston pin (72) and presenting a second radially outer annular collar (86), with a third control chamber (90) being formed between said valve housing (36) and said second annular collar (86).

5. Trailer control valve according to Claim 4, **characterised in that** the carrying force that can be generated by said displaceable body (74) on said second control piston (46) can be transferred by means of a stop (76) on said piston pin (72).

6. Trailer control valve according to Claim 5, **characterised in that** said displacement cup (78) encompasses said piston control cup (84) at least partially and forms the first section (92) of said retaining chamber (94) between its cup bottom and the cup bottom of said control piston cup (84).

7. Trailer control valve according to Claim 6, **characterised in that** said second control chamber (88) is formed between said first annular collar (82) of said displacement collar (78), said second annular collar (86) of said control piston cup (84) and said valve housing (36).

8. Trailer control valve according to Claim 7, **characterised in that** the areas of said displacement cup (78) and said first annular collar (82), which are operative in the displacement direction, are of such a size that the pressure forces created on these areas by pressure acting on said retaining chamber (94) compensate each other.

9. Trailer control valve according to Claim 8, **characterised in that** said double-seated valve (16) is disposed on the head-side end of said second control piston (46) and comprises a first and a second seat-type valve (58, 64), with said first seat-type valve (58) being formed by a first valve seat (50) on said first control piston (38) and a valve body (56) that is biased by a valve pressure spring (66) against a second valve seat (62) on said second control piston (46) and cooperates with the latter to form said second seat-type valve (64).

10. Trailer control valve according to any of the preceding Claims, **characterised in that** it encompasses a retaining valve (RV) that can be switched by an electro-pneumatic control circuit and that communicates, on the upstream side, via a connector (20) with a first pneumatic service brake circuit and, on the downstream side, with said first control chamber (8), which retaining valve (RV) assumes its blocking position in the energised state, when said electro-pneumatic control circuit is active, and blocks said first pneumatic service brake circuit and unblocks the latter, when said electro-pneumatic circuit has failed, by assuming its de-energised passage position.

11. Trailer control valve according to Claim 10, **characterised in that** it encompasses an inlet valve (EV) and an outlet valve (AV), which are both adapted for being controlled by said electro-pneumatic control circuit and which are configured as 2/2-way valves operated by solenoids with a de-energised blocking position, with said inlet valve (EV) being connected, on the upstream side, to said connector (2) of said supply line of the trailer vehicle and, on the downstream side, to said first control chamber (8) and with said outlet valve (AV) being connected, on the upstream side, to said first control chamber (8) and, on the downstream side, to a valve venting means (10).

## Revendications

1. Soupape de distribution (1) pour un système de freinage pneumatique d'un ensemble tracteur/remorque, comprenant:
(a) une cage de soupape (36);
(b) une première chambre de distribution (8), qui est reliée, via un raccord pneumatique de commande (20), à un premier circuit du frein de service pneumatique et à un circuit électropneumatique de commande dudit véhicule tracteur et qui transfère des signaux modulés de pression à un premier piston distributeur (38), qui est reçu à l'intérieur de ladite cage de soupape (36) pour un mouvement de déplacement;
(c) un deuxième piston distributeur (46), qui est reçu, pour un mouvement de déplacement, à l'intérieur de ladite cage de soupape (36) et qui coopère avec un corps de soupape (56) et avec ledit premier piston distributeur (38) en formant une soupape à double siège (16) réglable par ledit deuxième piston distributeur et ledit premier piston distributeur (38);
(d) une chambre de service (42), à laquelle un conduit de freinage (26) dudit tracteur est raccordé;
(e) une chambre de réserve (70), qui se trouve en communication via un raccord (2) à un réservoir d'air comprimé dudit véhicule tracteur et qui est apte à être raccordé par la commande de ladite soupape à double siège (16) afin de permettre l'écoulement vers ladite chambre de service (42);
(f) une deuxième chambre de distribution (88), qui est raccordée via un raccord (34) à un circuit de frein de stationnement dudit véhicule tracteur;
(g) une troisième chambre de distribution (90), qui est raccordée via un raccord (18) à un deuxième circuit pneumatique de frein de service dudit véhicule tracteur et qui transfère des signaux de pression à partir du dernier vers le deuxième piston distributeur (46), ce qui cause le dernier à réaliser un mouvement pour la commande de ladite soupape à double siège (52);
caractérisée en ce
(h) qu'un corps (74) déplaçable par des signaux de pression dans ladite chambre de réserve (70) et dans ladite deuxième chambre de distribution (88) est disposé, qui, quand la pression décroît dans ladite chambre de réserve (70), est apte à être déplacé par les signaux de pression dans ladite deuxième chambre de distribution (88) d'une telle manière, qu'il engendre un effort d'entraînement, qui agit sur ledit deuxième piston distributeur (46), qui assiste le mouvement à commander ladite soupape à double siège (16), et en ce
(i) qu'une chambre de retenue (94) est disposée, qui se trouve en communication avec ladite première chambre de distribution (8) et qui constitue une première partie entre ledit corps déplaçable (74) et ledit deuxième piston distributeur (46), dans laquelle un effort de retenue peut être engendré par les signaux modulés de pression, qui agit sur ledit deuxième piston distributeur (46), ledit effort agissant en opposition au mouvement du dernier pour la commande de ladite soupape à double siège (16), et en ce
(j) qu'une deuxième partie (96) de ladite chambre de retenue (94) est formée entre ledit corps déplaçable (74) et ladite cage de soupape (36), dans laquelle un effort peut être engendré, qui agit sur ledit corps déplaçable (74) en opposition audit effort de retenue et qui est essentiellement égal au dernier.

2. Soupape de distribution selon la revendication 1, **caractérisée en ce qu'**il comprend un passage de connexion (97), qui relie ladite première chambre de distribution (8) à ladite chambre de retenue (94).

3. Soupape de distribution selon une quelconque des revendications 1 ou 2, **caractérisée en ce que** ledit corps déplaçable (74) comprend un godet de déplacement (78) à un premier collet annulaire radialement extérieur (82), qui constitue une deuxième partie (96) de ladite chambre de retenue (94) entre ledit collet et ladite cage de soupape (36).

4. Soupape de distribution selon la revendication 3, **caractérisée en ce que** ledit deuxième piston distributeur (46) comprend un bouton de piston (72) du côté de fond, le long duquel ledit godet de déplacement (78) est reçu dans un alésage passant central (80) pour le déplacement en sens longitudinal, et comprend, au plus, un godet de piston distributeur (84) appuyé par ledit bouton de piston (72) et présentant un deuxième collet annulaire radialement extérieur (86), une troisième chambre de distribution (90) étant formée entre ladite cage de soupape (36) et ledit deuxième collet annulaire (86).

5. Soupape de distribution selon la revendication 4, **caractérisée en ce que** l'effort d'entraînement, qui peut être engendré par ledit corps déplaçable (74) sur ledit deuxième piston distributeur (46), peut être transféré moyennant une butée (76) sur ledit piston pin (72).

6. Soupape de distribution selon la revendication 5, **caractérisée en ce que** ledit godet de déplacement (78) renferme ledit godet de commande du piston (84) au moins en partie et constitue la première partie (92) de ladite chambre de retenue (94) entre son fond de godet et le fond du godet dudit piston distributeur (84).

7. Soupape de distribution selon la revendication 6, **caractérisée en ce que** ladite deuxième chambre de distribution (88) est formée entre ledit premier collet annulaire (82) dudit collet de déplacement (78), ledit deuxième collet annulaire (86) dudit godet du piston distributeur (84) et ladite cage de soupape (36).

8. Soupape de distribution selon la revendication 7, **caractérisée en ce que** les aires dudit godet de déplacement (78) et dudit premier collet annulaire (82), qui sont opératives en sens du déplacement, ont une telle taille, que les efforts de pression, qui sont engendrés sur ces aires par la pression, qui agit sur ladite chambre de retenue (94), compensent l'un l'autre.

9. Soupape de distribution selon la revendication 8, caractérisée en en ce que ladite soupape à double siège (16) est disposée à l'extrémité du côté de tête dudit deuxième piston distributeur (46) et comprend des première et deuxième soupapes à siège (58, 64), ladite première soupape à siège (58) étant formée par une première siège de soupape (50) sur ledit premier piston distributeur (38) et par un corps de soupape (56), qui est mis en précontrainte par un ressort de pression de soupape (66) contre une deuxième siège de soupape (62) sur ledit deuxième piston distributeur (46), en coopérant avec le dernier afin de constituer ladite deuxième soupape à siège (64).

10. Soupape de distribution selon une quelconque des revendications précédentes, **caractérisée en ce qu'**elle renferme une soupape de retenue (RV), qui peut être commuté par un circuit électropneumatique de commande et qui se trouve en communication, du côté en amont, via un raccord (20) avec un premier circuit pneumatique de frein de service, et, du côté en aval, avec ladite première chambre de distribution (8), ladite soupape de retenue (RV) étant commandé en sa position de blocage, en état hors tension, quand ledit circuit électropneumatique de commande est opératif, et débloquant ledit circuit de frein de service, quand ledit circuit électropneumatique est tombé en panne, en étant commandé en sa position de passage hors circuit.

11. Soupape de distribution selon la revendication 10, **caractérisée en ce qu'**elle renferme une soupape d'entrée (EV) et une soupape de sortie (AV), qui sont aptes, toutes les deux, à être commandé par ledit circuit électropneumatique de commande et qui sont configurées sous forme de vannes à 2/2 voies, commandées par des solénoïdes à position hors tension de blocage, laquelle soupape d'entrée (EV) est reliée, du côté en amont, audit raccord (2) dudit conduit de réserve du véhicule remorque et, du côté en aval, à ladite première chambre de distribution (8) , pendant que ladite soupape de sortie (AV) est reliée, du côté en amont, à ladite première chambre de distribution (8) et, du côté en aval, à un moyen d'aération de soupape (10).
